(19) Europäisches Patentamt
European Patent Office
Office européen des brevets

(11) **EP 2 594 422 B1**

(12) **FASCICULE DE BREVET EUROPEEN**

(45) Date de publication et mention
de la délivrance du brevet:
**06.04.2016 Bulletin 2016/14**

(51) Int Cl.:
*B60K 26/04* (2006.01)        *B60W 50/02* (2012.01)
*B60W 50/038* (2012.01)

(21) Numéro de dépôt: **12192324.7**

(22) Date de dépôt: **13.11.2012**

(54) **Méthode de détection d'une pédale d'accélarateur bloquée**

Verfahren zur Erkennung eines blockierten Gaspedals

Method for detecting a blocked accelerator pedal

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.11.2011 FR 1160550**

(43) Date de publication de la demande:
**22.05.2013 Bulletin 2013/21**

(73) Titulaire: **PEUGEOT CITROËN AUTOMOBILES SA
78140 Vélizy-Villacoublay (FR)**

(72) Inventeurs:
• **Fischer, Jérémie
27230 Saint Aubin de Scellon (FR)**
• **Clausolles, Nathalie
78300 POISSY (FR)**

(56) Documents cités:
**DE-A1- 4 017 045        FR-A1- 2 682 648
US-A1- 2001 029 414**

EP 2 594 422 B1

**Description**

La présente invention concerne le domaine des pédales d'accélérateur, et plus particulièrement une méthode de détection d'une pédale d'accélérateur bloquée.

Historiquement la pédale d'accélérateur des véhicules automobiles était reliée mécaniquement au moteur à l'aide d'un système de renvoi mécanique ou câble coulissant dans une gaine, ce renvoi ou câble était relié à un carburateur, un boîtier papillon ou une pompe à injection, contrôlant le couple délivré aux roues du véhicule. La complexité croissante des véhicules liée aux différentes normes concernant les émissions de polluants réglementés mais également l'optimisation de la consommation de carburant ont conduit les constructeurs à utiliser des systèmes électroniques embarqués permettant d'assurer, avec plus de souplesse et de possibilités, la gestion du moteur thermique ou plus récemment des nouvelles chaînes de traction hybrides ou électriques.

La pédale autrefois reliée mécaniquement à des organes mécaniques est désormais reliée électriquement aux calculateurs embarqués, ce ou ces calculateurs disposent désormais également de l'information liée à l'appui sur la pédale de frein. Les informations des deux pédales (accélérateur et frein) sont généralement transmises à un calculateur électronique effectuant la gestion de la mise à disposition du couple aux roues du véhicule le permettant d'avancer. Cette mise à disposition de couple peut être effectuée avec un moteur thermique conventionnel, un groupe motopropulseur hybride ou électrique.

La pédale d'accélérateur d'un véhicule moderne, bien que reliée électriquement aux calculateurs est un composant mécanique sujet à l'usure et à l'environnement extérieur, l'usure ainsi que la présence d'un obstacle dans l'habitacle du véhicule (par exemple un tapis de sol) sont donc les principaux facteurs qui peuvent conduire à un blocage mécanique de la pédale. Une pédale d'accélérateur bloquée est une situation critique. En effet, que le groupe motopropulseur soit thermique (avec boîte de vitesses manuelle ou automatique), hybride, ou électrique, il en résulte une incohérence entre la « volonté conducteur » et le couple effectif aux roues. Dans le cas présent cette situation est qualifiée « d'accélération intempestive », la pédale restant en position enfoncée même si le conducteur lève le pied. Cette situation se traduit par une perte de maitrise du véhicule induite par une défaillance du système.

Une solution pour lutter contre cet inconvénient est décrite par le document JP 2010242553 qui propose un dispositif de diagnostic d'anomalie d'une pédale d'accélérateur au moyen d'une expression d'identification décrivant la relation entre la position de la pédale d'accélération et l'ouverture du papillon.

Il est également connu par la demande de brevet KR 20070072205 une méthode pour diagnostiquer une erreur sur un capteur de pédale d'accélérateur d'un véhicule basé sur les informations envoyées par les capteurs redondants disposés sur la pédale d'accélérateur.

Une méthode de détection d'une pédale d'accélérateur bloquée d'un véhicule, dont la pédale de frein comporte au moins deux capteurs de frein, comprenant la détermination de la présence d'un défaut au niveau de la pédale d'accélérateur par l'intermédiaire de l'activation de la pédale de frein est connue du document DE 40 17 045 A1.

L'inconvénient de ces méthodes provient du fait qu'elles se basent uniquement sur la position de la pédale de l'accélérateur, ce qui peut être source d'erreurs.

La présente invention a donc pour objet de pallier un ou plusieurs des inconvénients de l'art antérieur en proposant une méthode qui permet de détecter le blocage de la pédale d'accélérateur en utilisant des informations supplémentaires à celles apportées par la pédale d'accélérateur, le but étant de réduire la durée durant laquelle le symptôme d'accélération intempestive se manifeste.

Pour cela la présente invention propose une méthode de détection d'une pédale d'accélérateur bloquée d'un véhicule, dont la pédale de frein comporte au moins deux capteurs de frein, comprenant les phases suivantes :

- détermination de la présence d'un défaut au niveau de la pédale d'accélérateur par l'intermédiaire de l'activation de la pédale de frein,
- enregistrement du défaut,
- correction du défaut,

dans laquelle la phase de détermination de la présence d'un défaut comprend les étapes suivantes :

- vérification des conditions de détection d'un défaut,
- confirmation ou réhabilitation du défaut,

et dans laquelle la condition de détection du défaut se fait en comparant les valeurs RM du régime moteur, VV de la vitesse de véhicule et PPA1 de la position de pédale acquise 1 avec respectivement des valeurs seuil S1, S2 et S3, les contions de détection étant réunies lorsque les valeurs RM, VV et PPA1 sont respectivement supérieures ou égales à S1, S2 et S3.

Dans une situation d'accélération intempestive la pression exercée sur la pédale de frein est un bon indicateur.

En effet, le conducteur pour pallier le blocage de la pédale d'accélérateur va avoir pour réflexe d'appuyer fortement et brutalement sur la pédale de frein. La pédale de frein donne ainsi une information rapide sur la situation. La situation d'accélération intempestive peut être donc être détectée et rapidement interrompue, le mode de fonctionnement normal du véhicule peut être également être retrouvé rapidement sans arrêt de ce dernier (en roulant), ni opération de maintenance particulière si la pédale est mécaniquement débloquée.

Selon un mode de réalisation de l'invention, la phase de détermination de la présence d'un défaut est interrompue si au moins une des valeurs RM, VV et PPA1 est respectivement inférieure à S1, S2 et S3.

Selon un mode de réalisation de l'invention, la confirmation du défaut est réalisée lorsque les conditions de détection d'un défaut sont remplies et que les deux capteurs de frein sont activés par un appui franc sur la pédale de frein.

Selon un mode de réalisation de l'invention, la méthode comprend avant la phase d'enregistrement du défaut confirmé, une étape supplémentaire consistant à comparer en valeur absolue une valeur de la pédale d'accélérateur avec la valeur PPA1 acquise au début de la détermination de la présence d'un défaut, et si la valeur de la pédale d'accélérateur est différente de la valeur PPA1, à interrompre la condition de détection du défaut.

Cette solution technique permet d'éviter des fausses détections de défaut. En effet si l'on vérifie uniquement le fait que la dérivée de position de la pédale est en dessous d'un seuil, il en résulte une possibilité de détection d'une pédale stable alors qu'en définitive elle bouge lentement.

Selon un mode de réalisation de l'invention, la réhabilitation du défaut confirmé est réalisée si la valeur de la position de la pédale d'accélérateur est différente en valeur absolue de la valeur PPA1 et qu'au moins un des capteurs de frein n'est plus activé.

Selon un mode de réalisation de l'invention, la phase de correction du défaut consiste à remplacer la valeur de PPA1 par une valeur de remplacement PPA2 afin que le véhicule fonctionne comme s'il n'y avait pas de défaut.

Selon un mode de réalisation de l'invention, le défaut confirmé est conservé en mémoire volatile.

De cette façon, si un défaut a été confirmé sur un roulage et que le véhicule est arrêté, le fait d'enregistrer le défaut en état confirmé permet au prochain redémarrage de ne pas avoir un moteur thermique qui s'emballe (du à une pédale restée mécaniquement bloquée). Il est alors nécessaire de faire bouger la pédale d'accélérateur pour réhabiliter le défaut.

Selon un mode de réalisation de l'invention, lors de l'initialisation du calculateur du véhicule, la différence de valeur entre PPA1 et la valeur de la pédale d'accélérateur est remise à zéro pour éviter une fausse réhabilitation (cas d'un défaut enregistré au précédent roulage).

D'autres caractéristiques et avantages de l'invention seront mieux compris et apparaîtront plus clairement à la lecture de la description faite, ci-après, en se référant aux figures annexées et données à titre d'exemple:

- la figure 1 est une représentation schématique des principales étapes de la méthode selon l'invention,

- la figure 2 est une représentation schématique des étapes de détection et d'arrêt de détection selon l'invention,

- la figure 3 est une représentation schématique des fonctions de confirmation et de réhabilitation selon l'invention.

La méthode selon l'invention a pour but de réduire la durée durant laquelle le symptôme d'accélération intempestive se manifeste. Elle s'applique aux véhicules avec un groupe motopropulseur (GMP) soit thermique (avec boîte de vitesses manuelle ou automatique), soit hybride, soit électrique. La méthode est mise en oeuvre par l'intermédiaire d'au moins un capteur de pédale d'accélérateur, au moins deux capteurs de pédale de frein, au moins un calculateur et un groupe moto propulseur.

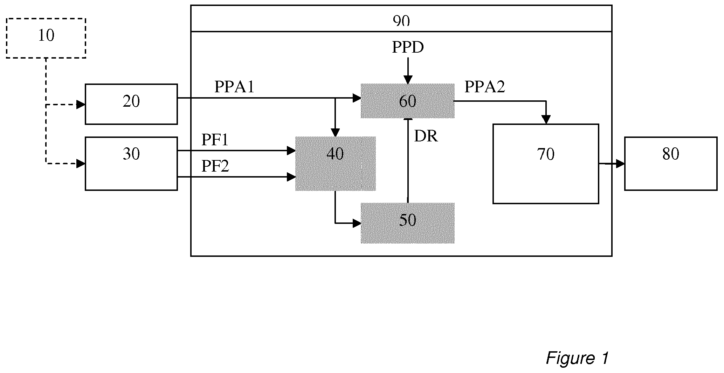

La volonté (10) du conducteur fait qu'il appuie sur la pédale d'accélérateur (20). Si cette pédale se bloque, le conducteur appuie franchement et fortement sur la pédale de frein (30). Au niveau du calculateur (90), les deux capteurs de frein envoient le message (PF1, PF2) au module diagnostic qui détermine si la pédale d'accélérateur est bloquée (40), le capteur de la pédale d'accélérateur envoie également un message (PPA1) au module diagnostic (40). Si la pédale d'accélérateur est bloquée, la méthode passe en mode enregistrement de défaut (50). Si le défaut est confirmé, alors la méthode passe en mode dégradé (60). La valeur PPA1 est remplacée par une valeur PPA2 et envoyée au module calcul consigne couple (70) et ensuite au module producteur de couple (80), ce qui va permettre de limiter l'accélération intempestive dans le temps, et de débloquer la pédale sans arrêter le véhicule (figure 1).

Le fonctionnement de la méthode selon l'invention (illustré sur les figures 1 à 3) s'articule ainsi autour de trois fonctions principales :

- la fonction diagnostic,

- la fonction enregistrement des défauts, et

- la fonction mode dégradé.

La description qui suit va présenter plus en détail ces différentes fonctions et étapes.

Dans la suite de la description le mot « vrai » signifie que la condition est remplie, par opposition au mot « faux » qui signifie que la condition n'est pas remplie.

**La fonction diagnostic :**

Elle a pour but de déterminer si oui ou non le véhicule est dans une situation d'accélération intempestive, c'est-à-dire si la pédale d'accélérateur est bloquée ou fonctionne normalement. Ce diagnostic est réalisé en plusieurs phases.

*Phase de vérification des conditions de détection*

La phase de vérification des conditions de détection de la situation d'accélération intempestive peut être réalisée lorsque plusieurs conditions sont réunies. Lorsque le véhicule fonctionne et que la pédale de l'accélérateur est enfoncée, il est possible de déterminer le régime du moteur et la vitesse du véhicule.

Les conditions de détection sont composées de variables du système comparées à des seuils prédéfinis. Ces variables sont :

- le régime de rotation du moteur thermique RM pour régime_moteur,

- la vitesse du véhicule VV pour vitesse_véhicule, et

- l'enfoncement de la pédale d'accélérateur PPA1 position_pédale_acquise représentant la volonté du conducteur, et l'absence d'une demande d'inhibition (InD) externe de la stratégie.

Les seuils prédéfinis sont :

- S1 pour la variable RM,

- S2 pour la variable VV, et

- S3 pour la variable PPA1.

Ce cadrage de valeur permet d'identifier le cas dans lequel le système sera autorisé à lancer une phase de détection via le flux AD pour autorisation_détection.

Dans le cas d'un groupe moto propulseur non conventionnel (chaine de traction hybride ou électrique), le seuil de régime ne comporte pas d'intérêt dans le mesure ou il n'est pas nécessaire de détecter une corrélation entre régime moteur et vitesse véhicule, puisque le conducteur ne peut généralement pas décorréler ces valeurs en rompant mécaniquement une liaison comme dans le cas d'un embrayage à friction présent entre le producteur de couple (moteur thermique) et le système de transmission (boîte de vitesses).

Lorsque les conditions sont remplies, c'est-à-dire lorsque :

- la valeur RM est supérieure ou égale à S1 et

- la valeur VV est supérieure ou égale à S2 et

- la valeur PPA est supérieure ou égale à S3,

alors la méthode est en phase AD.

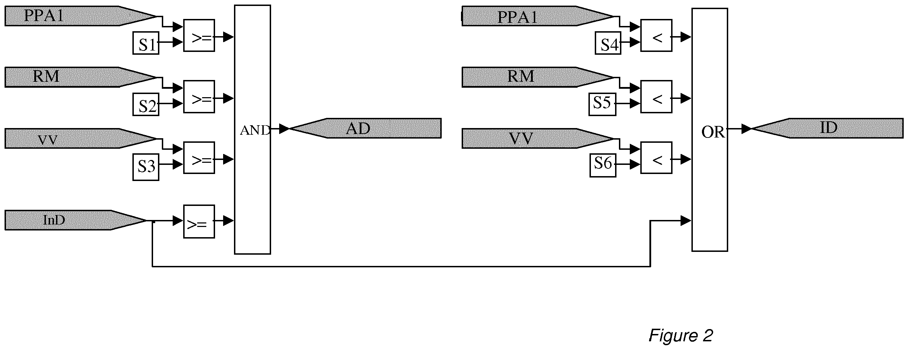

A l'issue de cette phase, la méthode est en mode détection de défaut (figure 2).

*Phase de vérification des conditions d'arrêt d'une détection en cours*

Lorsque les conditions de détection ne sont plus remplies, la méthode passe en mode interdiction de détection. Cela se produit lorsque le véhicule n'est plus dans des conditions considérées comme critiques. Dans ce cas la détection n'a pas lieu.

Ces conditions d'interdiction d'une détection sont également composées de variables du système comparées à des seuils. Ces variables sont les même que celles de la phase de condition de détection : le régime de rotation du moteur RM et valeur seuil S4, la vitesse du véhicule VV et valeur seuil S5, et l'enfoncement de la pédale d'accélérateur représentant la volonté du conducteur PPA et valeur seuil S6. Ce cadrage de valeur permet d'identifier le cas dans lequel une interdiction de détection sera générée ID pour interdiction_détection.

De la même façon que pour la phase de vérification des conditions de détection, dans le cas d'un GMP non conventionnel, le seuil de régime ne comporte pas d'intérêt.

Ainsi, lorsque les conditions d'interdiction de détection sont remplies, c'est-à-dire lorsque :

- la valeur RM est inférieure à S1 ou

- la valeur VV est inférieure à S2 ou

- la valeur PPA est inférieure à S3,

alors la méthode est en phase ID.

A l'issue de cette phase, il n'a pas été détecté de défaut, la méthode n'est pas en mode de détection de défaut (figure 2).

*Phases de confirmation et de réhabilitation*

Lorsque les conditions de détection sont remplies, la méthode passe en phase de confirmation du défaut ou de réhabilitation du défaut.

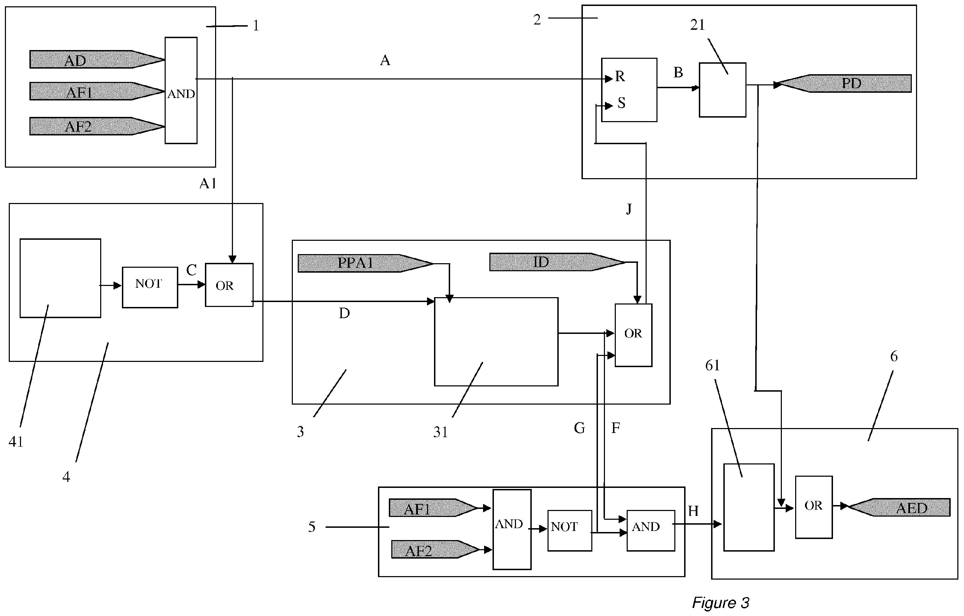

Les phases de confirmation et de réhabilitation sont composées de plusieurs sous fonctions, et en général de six sous-fonctions (illustrées sur la figure 3).

La sous-fonction 1 (1) permet de détecter un événement dit « brut » de détection du défaut, qui correspond à un appui sur la pédale de frein lorsque les conditions de détection AD sont remplies.

La sous-fonction 2 (2) représente la confirmation du défaut. Lorsque l'événement brut de détection du défaut apparaît, une temporisation est lancée pour confirmer le défaut, son état passe de « brut » à « confirmé » dès que la temporisation est écoulée.

La sous-fonction 3 (3) permet de capturer une valeur de position de la pédale d'accélérateur au moment de l'apparition du défaut dit brut (issu de la sous fonction 1).

La sous fonction 4 (4) a pour but lors de l'initialisation du calculateur d'éviter à la sous-fonction 3 de capter une valeur non robuste due à l'initialisation du calculateur.

La sous-fonction 5 (5) permet de détecter les conditions de réhabilitation brute d'une détection en cours (ou confirmée) en se basant sur un levé de pied de la pédale de frein partiel ou complet ainsi qu'un mouvement de la pédale d'accélérateur par rapport à sa position captée lors de la détection de l'événement « brut ».

La sous-fonction 6 (6) représente la partie réhabilitation du défaut. Lorsque l'événement brut de réhabilitation du défaut apparaît, une temporisation est lancée pour réhabiliter le défaut, son état passe de « brut » à « réhabilité » dès que la temporisation est écoulée.

Le fonctionnement de cette phase de confirmation et réhabilitation est le suivant (illustré sur la figure 3).

*Cas d'une confirmation de présence de défaut :*

Lorsque le véhicule est dans les conditions de détection (AD) et que le conducteur appuie suffisamment franchement sur la pédale de frein jusqu'à obtenir l'activation des deux capteurs de frein, les deux conditions AF1 pour appui_frein_1 et AF2 pour appui_frein_2, sont remplies (ou vrai) et la branche confirmation est activée via un passage à vrai du flux A durant un pas de calcul. Le flux A transmet l'état de la détection à une bascule (21) RS (pour Reset Set selon la terminologie anglo-saxonne).

La détection est alors positionnée en état « détection en cours » via la bascule RS. Cet état est matérialisé par l'état vrai du flux B correspondant à la sortie Q de la bascule. L'état vrai du flux B engendre l'activation d'une temporisation. Lorsque cette temporisation atteint un seuil T1 les flux « appel_enregistreur_défaut » et « présence_défaut » sont positionnés à vrai afin d'enregistrer le défaut à l'état « confirmé ». Cette confirmation de défaut intervient uniquement si le flux J ne passe pas à vrai (détaillé plus loin dans la description).

*Cas d'une interruption de confirmation de défaut :*

Lorsque le système est en cours de confirmation d'un défaut (flux B est vrai et valeur courant temporisation < T1) la détection peut être interrompue si le client effectue différentes actions :

- 1 ère action : le client met le véhicule dans des conditions qui ne sont plus considérées comme critiques. Cette situation est matérialisée par le passage à vrai du flux ID.

- 2ième action : lorsque l'événement brut de détection du défaut apparait, le passage à vrai du flux A génère un enregistrement de la valeur de la position de la pédale d'accélérateur via le flux A. Cette valeur est enregistrée via le flux D actionnant un switch. Ce switch permet d'enregistrer la valeur absolue de la pédale d'accélérateur via la variable E. La variable E de position enregistrée de la pédale est comparée (31) avec la PPA1. Lorsque la valeur absolue de la différence entre E et PPA1 est supérieure à une valeur seuil dP1, une différence de position de pédale est détectée ce qui signifie que le conducteur est parvenu à modifier la position de sa pédale d'accélérateur. Il n'y a plus de situation critique d'accélération intempestive. Une temporisation (41) permet d'inhiber la détection uniquement lors de l'initialisation du calculateur, il est ainsi possible de fermer le switch (31) permettant d'obtenir virtuellement une pédale stable, cette action permet de s'affranchir de potentielles mauvaises acquisitions de valeurs lors de l'initialisation du calculateur.

- 3ième action, au moins un des capteurs de frein passe à l'état faux et le flux G passe à vrai.

Dans ces 3 cas de figure la bascule est positionnée à Q égale à 0 via le flux J, le flux B passe alors à faux.

*Cas d'une réhabilitation de défaut confirmé*

Dans le cas d'un défaut confirmé (B est égal à vrai et temporisation confirmation est supérieure ou égale à T1), un seul scénario permet de réhabiliter la défaillance. Le système doit détecter un mouvement de la pédale d'accélérateur par rapport à la position figée lors de l'activation de la détection (voir 2ieme action du cas d'interruption d'une confirmation de défaut). Cette information est reçue par le flux F à l'état vrai et le système doit percevoir un relâchement de la pédale de frein, c'est-à-dire qu'un des deux capteurs envoie la valeur faux. Dans ce cas le flux H est vrai et active la temporisation de réhabilitation (61). Lorsque la temporisation est supérieure ou égale à T2 alors « appel_enregistreur-défaut »(AED) est positionné à vrai durant un pas de calcul avec « présence_défaut » égale à faux. Dans ce cas l'enregistreur de défaut enregistre le défaut avec son nouvel état « réhabilité »

*Cas de l'initialisation du calculateur :*

Lors de l'initialisation du calculateur, les variables d'entrée du diagnostic peuvent parfois être incohérentes en particulier la variable « position_pédale_acquise ». Si un défaut a été confirmé dans un roulage précédent sans être réhabilité, il est important de ne pas subir une réhabilitation due à l'initialisation du calculateur via des données d'entrée incohérentes. Pour ce faire lors de l'initialisation une temporisation est lancée. Lorsque cette temporisation est inférieure à T0 le flux C donc D est à vrai. Dans ce cas le calcul de la différence entre « position_pédale_acquise » et « dP1 » est maintenu à 0. Cette inhibition de la détection de mouvement de la pédale permet de s'affranchir d'une fausse détection due à l'initialisation su système embarqué.

*Exemple de valeurs :*

Les variables utilisées dans la présente invention peuvent par exemple avoir pour valeur :

S1= 1100; S2 = 3km/h; S3 = 20%; S4 = 1050; S5 = 2km/h; S6 = 17%; T0 = 100ms;

T1 = 2s; T2 = 400ms; Dp1 = 3%

**La fonction enregistrement de défauts.**

Lorsque le défaut est confirmé, la méthode passe en mode enregistrement de défaut. La fonction enregistrement des défauts a pour but de mémoriser les résultats des diagnostics. Le diagnostic appelle l'enregistreur de défauts à l'aide d'un flux « appel_enregistreur_défaut » (vrai / faux) et positionne le résultat de détection sur le flux « présence_défaut » (vrai / faux). Lorsque le diagnostic appelle l'enregistreur défaut avec le flux « présence_défaut » égale à vrai alors l'enregistreur défaut positionne en mémoire le statut du diagnostic concerné à la valeur « défaut_confirmé ». A l'inverse, lorsque le diagnostic appelle l'enregistreur défaut avec le flux « présence_defaut » égale à faux alors l'enregistreur défaut positionne en mémoire le statut du diagnostic concerné à la valeur « defaut_réhabiiité ».

Lorsque le défaut passe de l'état « défaut_réhabilité » à l'état « défaut_confirmé » alors l'enregistreur de défaut positionne le flux « demande_reconfiguration » à vrai. C'est à dire qu'il est nécessaire de reconfigurer la valeur de PPA1 pour arrêter la situation à risque. A l'inverse, lorsque le défaut passe d'état « défaut_confirmé » à « défaut_réhabilité » l'enregistreur de défaut positionne le flux « demande_reconfiguration » à faux. Dans ce cas, puisque le défaut a été corrigé, il n'est pas nécessaire de reconfigurer.

En cas de coupure d'alimentation du calculateur, le statut du défaut est conservé en mémoire non volatile.

**La fonction mode dégradé**

Lorsqu'à l'issue de l'étape précédente, la demande de reconfiguration est vrai, c'est à dire qu'il faut reconfigurer la valeur de PPA1, la méthode passe en mode fonction dégradée.

La fonction mode dégradé a pour but de remplacer la valeur de pédale acquise par le système « position_pedale_acquise_1 PPA1, par une valeur de remplacement PPA2. Lorsque l'information « demande_reconfiguration » (DR) a pour valeur vrai, alors « position_pedale_acquise_2 » PPA2 est égale à la valeur « position_pédale_défaut » (PPD) qui est une valeur permettant d'arrêter la situation à risque. Lorsque « demande_reconfiguration » est égale à faux alors « position_pedale_acquise_2 » est égale à la valeur « position_pedale_acquise_1 ».

Cela permet ainsi de corriger le défaut confirmé indiquant que la pédale est bloquée. En remplaçant la valeur PPA1 par PPA2, le véhicule fonctionne comme si la pédale n'était pas bloquée. Il est ainsi possible pendant ce temps de débloquer la pédale pour revenir en mode de fonctionnement normal, c'est-à-dire en mode de détection interdit.

Il doit être évident pour l'homme du métier que la présente invention ne doit pas être limitée aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

**Revendications**

1. Méthode de détection d'une pédale d'accélérateur bloquée d'un véhicule, dont la pédale de frein comporte au moins deux capteurs de frein, comprenant les phases suivantes :

   - détermination (40) de la présence d'un défaut au niveau de la pédale d'accélérateur par l'intermédiaire de l'activation de la pédale de frein,
   - enregistrement du défaut (50),
   - correction du défaut (60),

   dans laquelle la phase de détermination de la présence d'un défaut comprend les étapes suivantes :

   - vérification des conditions de détection d'un défaut,
   - confirmation ou réhabilitation du défaut

   et dans laquelle la condition de détection du défaut se fait en comparant les valeurs RM du régime moteur, VV de la vitesse de véhicule et PPA1 de la position de pédale acquise 1 avec respectivement des valeurs seuil S1, S2 et S3, les contions de détection étant réunies lorsque les valeurs RM, VV et PPA1 sont respectivement supérieures ou égales à S1, S2 et S3.

2. Méthode selon la revendication 1 dans laquelle la phase de détermination de la présence d'un défaut est interrompue si au moins une des valeurs RM, VV et PPA1 est respectivement inférieure à S1, S2 et S3.

3. Méthode selon la revendication 1 ou 2 dans laquelle la confirmation du défaut est réalisée lorsque les conditions de détection d'un défaut sont remplies et que les deux capteurs de frein sont activés (AF1, AF2) par un appui franc sur la pédale de frein.

4. Méthode selon la revendication 1 ou 2 comprenant avant la phase d'enregistrement du défaut confirmé, une étape supplémentaire consistant à comparer en valeur absolue une valeur de position la pédale d'accélérateur avec la valeur PPA1 acquise au début de la détermination de la présence d'un défaut, et si la valeur de la position de la pédale d'accélérateur est différente de la valeur PPA1, à interrompre la condition de détection du défaut.

5. Méthode selon une des revendications 1 à 4 dans laquelle la réhabilitation du défaut confirmé est réalisée si la valeur de la position de la pédale d'accélérateur est différente en valeur absolue de la valeur PPA1 et qu'au moins un des capteurs de frein n'est plus activé.

6. Méthode selon une des revendications précédentes dans laquelle la phase de correction du défaut consiste à remplacer la valeur de PPA1 par une valeur de remplacement PPA2 afin que le véhicule fonctionne comme s'il n'y avait pas de défaut.

7. Méthode selon l'une des revendications 1 à 6 dans laquelle le défaut est conservé en mémoire volatile.

8. Méthode selon une des revendications 1 à 7 dans laquelle lors de l'initialisation du calculateur du véhicule, la différence de valeur entre PPA1 et la valeur de la pédale d'accélérateur est remise à zéro pour éviter une fausse réhabilitation.

**Patentansprüche**

1. Verfahren zur Erkennung eines blockierten Gaspedals eines Fahrzeugs, dessen Bremspedal zumindest zwei Bremssensoren umfasst, die folgenden Phasen umfassend:

   - Bestimmung (40) der Präsenz eines Fehlers im Bereich des Gaspedals durch die Aktivierung des Bremspedals,
   - Speicherung des Fehlers (50),
   - Korrektur des Fehlers (60),

   wobei die Phase der Bestimmung der Präsenz eines Fehlers die folgenden Schritte umfasst:

   - Prüfung der Bedingungen für die Erkennung eines Fehlers,
   - Bestätigung oder Rehabilitierung des Fehlers

   und wobei die Bedingung für die Erkennung des Fehlers durch den Vergleich der Werte RM der Motordrehzahl, VV der Fahrzeuggeschwindigkeit und PPA1 der erhobenen Pedalposition 1 mit jeweils den Grenzwerten S1, S2 und S3 erfolgt, wobei die Bedingungen für die Erkennung erfüllt sind, wenn die Werte RM, VV und PPA1 jeweils größer oder gleich S1, S2 und S3 sind.

2. Verfahren nach Anspruch 1, wobei die Phase der Bestimmung der Präsenz eines Fehlers unterbrochen wird, wenn zumindest einer der Werte RM, VV und PPA1 jeweils kleiner S1, S2 und S3 ist.

3. Verfahren nach Anspruch 1 oder 2, wobei die Bestätigung des Fehlers durchgeführt wird, wenn die Bedingungen für die Erkennung eines Fehlers erfüllt sind, und die beiden Bremssensoren durch eine klare Betätigung des Bremspedals aktiviert (AF1, AF2) werden.

4. Verfahren nach Anspruch 1 oder 2, vor der Phase der Speicherung des bestätigten Fehlers einen zusätzlichen Schritt umfassend, der darin besteht, in absoluten Werten einen Positionswert des Gaspedals mit dem Wert PPA1 zu vergleichen, der zu Beginn der Bestimmung der Präsenz eines Fehlers erfasst wurde, und wenn sich der Wert der Position des Gaspedals vom Wert PPA1 unterscheidet, die Unterbrechung der Bedingung für die Erkennung des Fehlers.

5. Verfahren nach einem der Ansprüche 1 bis 4, wobei die Rehabilitierung des bestätigten Fehlers durchgeführt wird, wenn sich der Wert der Position des Gaspedals vom absoluten Wert des Werts PPA1 unterscheidet und zumindest einer der Bremssensoren nicht mehr aktiviert ist.

6. Verfahren nach einem der vorherigen Ansprüche, wobei die Phase der Korrektur des Fehlers darin besteht, den Wert von PPA1 durch einen Ersatzwert PPA2 zu ersetzen, damit das Fahrzeug funktioniert, als gäbe es keinen Fehler.

7. Verfahren nach einem der Ansprüche 1 bis 6, wobei der Fehler im flüchtigen Speicher erhalten wird.

8. Verfahren nach einem der Ansprüche 1 bis 7, wobei bei der Initialisierung des Rechners des Fahrzeugs der Unterschied des Werts zwischen PPA1 und dem Wert des Gaspedals auf Null zurückgesetzt wird, um eine falsche Rehabilitierung zu vermeiden.

**Claims**

1. Method for detecting a blocked accelerator pedal of a vehicle, the brake pedal of which comprises at least two brake sensors, comprising the following phases:

   - determination (40) of the presence of a fault at the accelerator pedal by means of the activation of the brake pedal,
   - recording of the fault (50),
   - correction of the fault (60),

   wherein the phase of determination of the presence of a fault comprises the following steps:

   - verification of the fault detection conditions,
   - confirmation or clearance of a fault.

   and in which the fault detection condition is implemented by comparing the values RM of the engine speed, VV of the vehicle speed and PPA1 of the acquired pedal position 1 with respectively threshold values S1, S2 and S3, the detection conditions being met when the values RM, VV and PPA1 are respectively greater than or equal to S1, S2 and S3.

2. Method according to claim 1, in which the phase of determining the presence of a fault is interrupted if at least one of the values RM, VV and PPA1 is respectively less than S1, S2 and S3.

3. Method according to claim 1 or 2, in which the fault is confirmed when the fault detection conditions are met and the two brake sensors are activated (AR1, AF2) by strong pressure on the brake pedal.

4. Method according to claim 1 or 2, comprising, before the phase of recording of the confirmed fault, a supplementary step consisting of comparing in absolute value an accelerator pedal position with the value PPA1 acquired at the start of the determination of the presence of a fault and, if the accelerator pedal position is different from the value PPA1, interrupting the fault detection condition.

5. Method according to one of claims 1 to 4, in which the confirmed fault is cleared if the accelerator pedal position is different in absolute value from the value PPA1 and at least one of the brake sensors is no longer activated.

6. Method according to one of the preceding claims, in which the fault correction phase consists of replacing the value PPA1 with a replacement value PPA2 so that the vehicle functions as if there had been no fault.

7. Method according to one of claims 1 to 6, in which the fault is stored in volatile memory.

8. Method according to one of claims 1 to 7 in which, when the vehicle computer is initialised, the difference in value between PPA1 and the accelerator pedal value is reset to zero in order to avoid a false clearance.

Figure 1

Figure 2

Figure 3

EP 2 594 422 B1

**EP 2 594 422 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2010242553 B
- KR 20070072205
- DE 4017045 A1